# NEUE EUROPÄISCHE PATENTSCHRIFT

(11) **EP 0 806 313 B2**
(45) Veröffentlichungstag und Bekanntmachung des Hinweises auf die Entscheidung über den Einspruch: **02.05.2007**
(45) Hinweis auf die Patenterteilung: 22.08.2001
(21) Anmeldenummer: 97105887.0
(22) Anmeldetag: 10.04.1997
(51) Int. Cl.: B60J 7/12

(54) **Cabriolet-Fahrzeug**
Vehicle convertible
Véhicule convertible

(30) Priorität: 19.04.1996 DE 29607114 U; 13.02.1997 DE 29702421 U
(43) Veröffentlichungstag der Anmeldung: 12.11.1997
(73) Patentinhaber: Wilhelm Karmann GmbH, 49084 Osnabrück (DE)
(72) Erfinder: Maass, Joachim, D-49143 Bissendorf (DE); Schröder, Burkhard, D-48336 Sassenberg (DE); Heselhaus, Udo, D-49479 Ibbenbüren (DE); Bücker, Ralf, D-49170 Hagen (DE); Hüdepohl, Stefan, D-49086 Osnabrück (DE); Wohlgemuth, Jörg, D-49078 Osnabrück (DE); Rademacher, Udo, D-49084 Osnabrück (DE); Bensmann, Heiner, D-49124 Georgsmarienhütte (DE); Diestelkämper, Thomas, D-49124 Georgsmarienhütte (DE); Mikosch, Peter, D-49124 Georgsmarienhütte (DE); Dilge, Jörg, D-49084 Osnabrück (DE); Overberg, Matthias, - (DE)
(74) Vertreter: Busse & Busse Patentanwälte

(56) Entgegenhaltungen:
- WO-A-95/11140
- DE-A1- 3 814 379
- DE-A1- 19 534 290
- DE-C1- 4 441 667
- DE-C1- 4 441 670
- DE-U1- 9 102 147
- GB-A- 656 225

## Beschreibung

Die Erfindung betrifft ein Cabriolet-Fahrzeug mit einem das Faltverdeck tragenden Verdeckgestell.

Bei bekannten Cabriolet-Fahrzeugen (GB-A-0 656 225) ist die Verdeckgestell-Baugruppe aus einer Vielzahl von verschraubten Einzelteilen gebildet, die in einstückiger Ausführung als stranggepreßte Metallteile mit einem Nutprofil versehen sind, das zur Aufnahme von zusätzlichen Halteleisten vorgesehen ist. Die Montage dieser Einzelteile mit einer Verdeck-Dachhaut ist bei einer Vielzahl von Verbindungspaarungen, insbesondere Schraub- und Nagelverbindungen, überaus aufwendig.

Aus der WO95/11140 ist ein Cabriolet-Fahrzeug bekannt, bei dem Querspriegel eines Verdeckgestells als Strangpreßprofile aus einem Aluminiumwerkstoff hergestellt werden können. In diesen Querspriegeln sind Aufnahmekammern vorgesehen, in denen Befestigungselemente einer Verdeck-Dachhaut und eines Dachhimmels festzulegen sind. Verdeckteile sonstiger Art sind bei diesem Cabriolet-Fahrzeug in herkömmlicher Weise in bauaufwendiger Art vorzusehen.

Es ist Aufgabe der vorliegenden Erfindung, ein Cabriolet-Fahrzeug zu schaffen, dessen Verdeckgestell mit Einzelbauteilen zu versehen ist, die bei reduziertem Gewicht eine ingesamt vereinfachte Montage sowie eine hinreichend stabile Aufnahme der Verdeck-Dachhaut im Bereich jeweiliger Verbindungsteile ermöglicht, und zwar derart, daß das Dach in Schließstellung im Bereich der Dachspriegel eine gleichmäßige Dachkontur darbietet, darüber hinaus jedoch auch ermöglicht, weitere Verdeckteile auf montagefreundliche Art anzubinden.

Zur Lösung dieser Aufgabe zeichnet sich die Erfindung durch die im Anspruch 1 angegebenen Merkmale aus. Hinsichtlich wesentlicher weiterer Ausgestaltungen wird auf die Ansprüche 2 bis 28 verwiesen.

Das erfindungsgemäß ausgebildete Verdeckgestell weist im Bereich der Strangpreßprofilteile jeweils eine Querschnittsgeometrie auf, die mit einer auf geringen Materialverbrauch gerichtete Hohlraumstruktur bei verbesserter Stabilität insgesamt eine Gewichtsreduzierung des Verdeckgestells gewährleistet, wobei gleichzeitig die Strangpreßprofilteile mit jeweiligen Aufnahmeprofilierungen und/oder Hinterschneidungen im Querschnitt versehen sind, so daß damit für entsprechende Gegenglieder von zugeordneten Bauteilen und/oder Verbindungsteilen der Dachhaut überaus einfach montierbare Verbindungsbereiche geschaffen sind.

Die Strangpreßprofile können bei niedrigen Herstellungskosten mit geringem Aufwand an unterschiedliche Stütz- und Haltebedingungen, insbesondere im Bereich der Verbindungspaarungen bei der Dachhaut-Montage, angepaßt werden. Dabei sind in der Querschnittsgeometrie der Strangpreßprofilteile jeweilige Kanäle und Öffnungen zum Befestigen von Dichtungen oder dergleichen so integriert, daß zusätzliche Bearbeitungsschritte vor der Montage weitgehend entbehrlich sind oder gänzlich eingespart werden.

In vorteilhafter Ausführung der Dachspriegel sind in der Wandungskontur des einen Hohlprofil-Querschnitt aufweisenden Strangpreßprofilteils mehrere Aufnahmekammern mit schlitzförmigen Aufnahmeöffnungen vorgesehen, über die jeweilige mit der Verdeck-Dachhaut und/oder dem inneren Dachhimmel verbundene Klemmkeder derart in die Aufnahmekammer einführbar sind, daß die Klemmkeder in dieser Einbaulage über einen formschlüssigen Verbindungseingriff hinreichend stabil am Dachspriegel festgelegt sind und die Dachhaut insgesamt über eine in Schließstellung deren Konturform vorgebenden Abstützung spannbar ist. Gleichzeitig sind jeweilige zur Dachhaut gerichtete Verbindungsbereiche der Klemmkeder so im Aufnahmeschlitz geführt, daß eine weitgehend freie Beweglichkeit bei Entspannung der Dachhaut erreicht ist und damit Belastungsveränderungen im Bereich der Klemmkeder bzw. der Dachhaut, insbesondere bei häufigen Wiederholungen von Öffnungs- bzw. Schließbewegungen des Verdeckgestells, über eine Bewegung der Klemmkeder ausgeglichen werden. In diesem Verbindungsbereich sind Überbelastungen vermieden und damit ist die Langzeitstabilität der Dachhaut-Anbindung im Bereich der Dachspriegel insgesamt verbessert. Die Klemmkeder können dabei im Bereich der Dachspriegel überaus einfach montiert und demontiert werden.

Auf seiner zum Fahrzeuginnenraum gerichteten Unterseite ist das Hohlprofilteil ebenfalls mit einer Verbindungsprofilierung versehen, an der ein mit dem Innenhimmel verbundenes Gegenglied oder ein Klemmkeder lösbar festlegbar ist, so daß auch dieser Verbindungsbereich insgesamt überaus einfach montierbar und für eine Demontage, beispielsweise bei einem Wechsel der Dachhaut und/oder des Innenhimmels, geeignet ist.

In vorteilhafter Weiterbildung des Hohlprofilteils kann dieses, beispielsweise in seiner Bauteilhöhe, für verschiedene Dachhautstrukturen variabel gestaltet werden, so daß das Hohlprofilteil ohne unmittelbare Anlage- oder Verbindungsflächen am oberen Verdeckbezug in einen Freiraum zwischen der Polstermatte und dem Innenhimmel integrierbar ist. In Schließstellung des Verdeckgestells weist so die Dachhaut eine gleichmäßig ebene Kontur ohne im Bereich der Dachspriegel sichtbare Erhebungen oder Wellenformen auf, so daß der optische Gesamteindruck des Cabriolet-Fahrzeugs insgesamt verbessert ist.

Weitere Einzelheiten und Vorteile der Erfindung ergeben sich aus der nachfolgenden Beschreibung und der Zeichnung, die ein Ausführungsbeispiel des Gegenstands der Erfindung schematisch veranschaulicht. In der Zeichnung zeigen:
- Fig. 1: eine perspektivische Einzeldarstellung des erfindungsgemäßen Verdeckgestells mit den Tragwerksbauteilen in Schließstellung,
- Fig. 2: eine Ausschnittsdarstellung eines im Bereich des Dachspitzenteils vorgesehenen Strangpreßprofilteils gemäß einer Linie II-II in Fig. 1 in einer ersten Ausführungsform,
- Fig. 3: eine Ausschnittsdarstellung der Dachspitze ähnlich Fig. 2 mit dem Strangpreßprofilteil in einer zweiten Ausführungsform,
- Fig. 4: eine Ausschnittsdarstellung eines im Bereich des Seitenrahmens vorgesehenen Strangpreßprofilteils gemäß einer Linie IV-IV in Fig. 1,
- Fig. 5: eine Ausschnittsdarstellung des Seitenrahmens ähnlich Fig. 4 mit dem Strangpreßprofilteil in einer zweiten Ausführungsform,
- Fig. 6: eine Ausschnittsdarstellung eines Strangpreßprofilteils im Bereich der Hauptsäule gemäß einer Linie VI-VI in Fig. 1,
- Fig. 7: eine Ausschnittsdarstellung eines Strangpreßprofilteils im Bereichs des Hauptspriegels gemäß einer Linie VI-VI in Fig. 1,
- Fig. 8: eine Querschnittsdarstellung eines der als Hohlprofilteil ausgebildeten Dachspriegel gemäß einer Linie VIII - VIII in Fig. 1 mit einer Verdeck-Dachhaut in Einbaulage, und
- Fig. 9 bis Fig. 11: jeweilige Querschnittsdarstellungen ähnlich Fig. 8 mit unterschiedlichen Ausführungsformen der Hohlprofilteile.

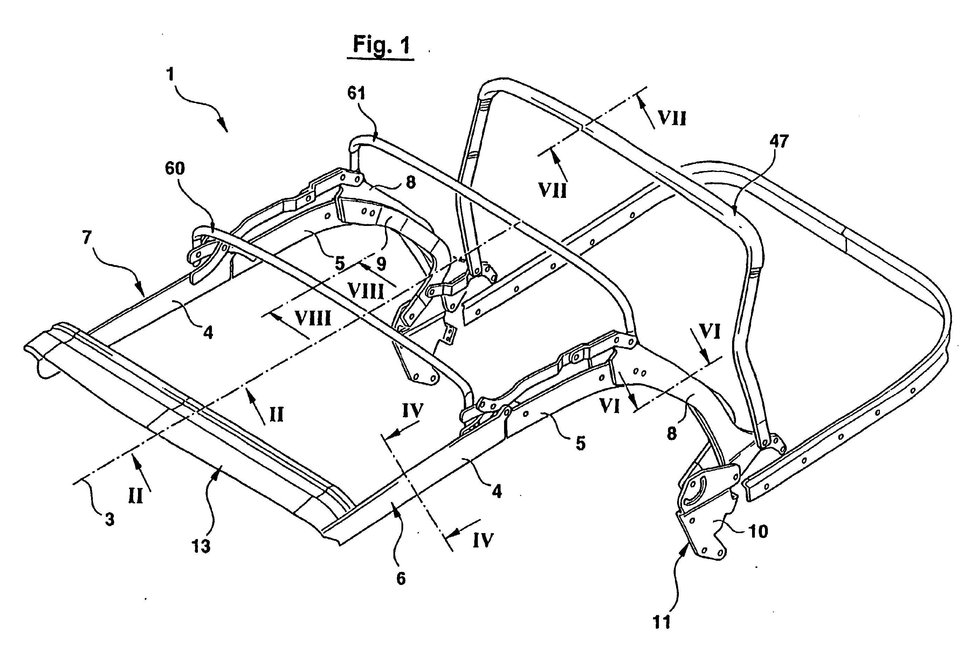

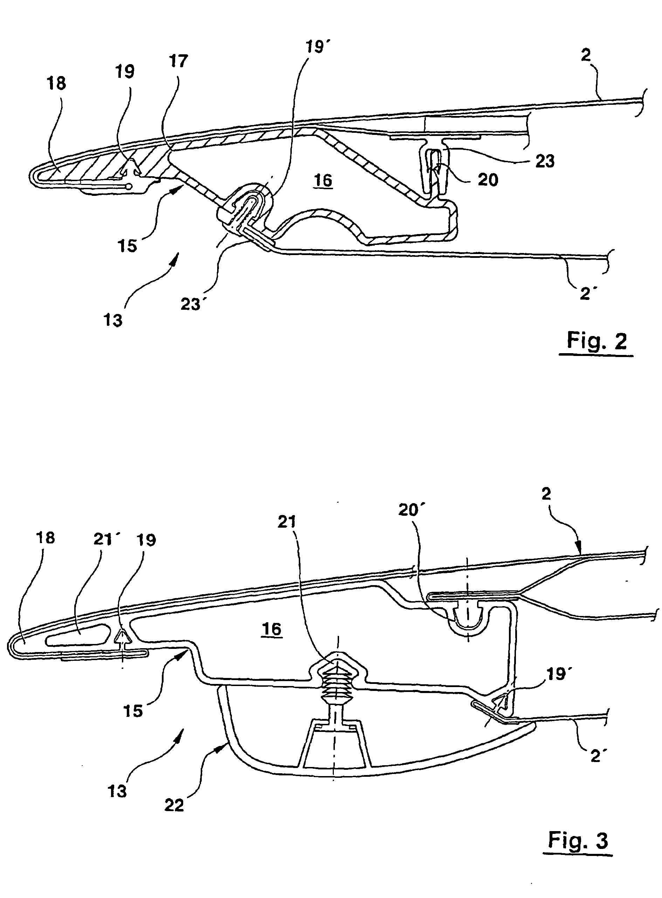

In Fig. 1 ist ein insgesamt mit 1 bezeichnetes Verdeckgestell eines nicht näher dargestellten Cabriolet-Fahrzeuges veranschaulicht, wobei zur Verdeutlichung der wesentlichen Einzelteile dieser Tragwerkskonstruktion eine diese überspannende Dachhaut 2 lediglich in den Ausschnittsdarstellungen gemäß Fig. 2 bis 7 sichtbar ist.

Das Verdeckgestänge 1 ist mit symmetrisch zur Fahrzeuglängsachse 3 angeordneten sowie aus vorderen und hinteren Teilstücken 4, 5 bestehenden Seitenrahmenteilen 6, 7 versehen, die jeweils einenends über eine Hauptsäule 8 und eine Hauptführungsstange 9 schwenkbeweglich an einem hinteren Hauptlager 10 der Fahrzeugkarosserie 11 abgestützt sind. Im vorderen Bereich sind die Seitenrahmenteile 6, 7 über ein in der dargestellten Schließstellung am oberen Querholm eines Windschutzscheibenrahmens (nicht dargestellt) anlegbares Dachspitzenteil 13 verbunden.

Das nachfolgend näher beschriebene Verdeckgestell 1 ist in erfindungsgemäßer Ausbildung als ein aus Strangpreßprofilteilen bestehendes Leichtbautragwerk ausgebildet, dessen Einzelbauteile ganz ober überwiegend aus Aluminium bestehen. Dabei sind die Strangpreßprofilteile in ihrer Querschnittskontur zumindest teilweise mit einem Aufnahmeprofil versehen, so daß bei der Montage der Verdeck-Dachhaut 2 und/oder von Gestängeteilen ein entsprechendes Halteteil in eine Verbindungsstellung verbringbar ist.

In Fig. 2 ist ein Strangpreßprofilteil 15 für den Bereich der Dachspitze 13 dargestellt, das im Querschnitt als ein Hohlprofil 16 ausgebildet ist. Der vordere Wandungsbereich 17 des Hohlprofils 16 weist dabei eine Formnase 18 auf, die in der dargestellten Einbaulage von der ein- oder mehrlagigen Dachhaut 2 übergriffen ist. Das Hohlprofil 16 ist an seinem Außenumfang mit mehreren nach innen gerichteten Aufnahmekammern 19, 19' und einem nach außen vorstehenden Haltesteg 20 versehen, so daß mit diesen Profilteilen jeweilige Verbindungspaarungen zur Dachhaut 2 bzw. dieser zugeordneten Halteteilen 23, 23' gebildet werden. Im Bereich des Halteteiles 23' ist dabei ein zum Innenraum des Fahrzeugs gerichtetes Dachhautteil 2' festgelegt.

In Fig. 3 ist das Hohlprofil 16 ähnlich Fig. 2 in einer zweiten Ausführungsform dargestellt, wobei zusätzlich zu den Aufnahmekammern 19, 19', 20' für die Dachhautanbindung eine Aufnahmekammer 21 zur Festlegung eines Abdeckteiles 22 vorgesehen ist und die Formnase 18 einen gewichtsreduzierenden Hohlraum 21' aufweist.

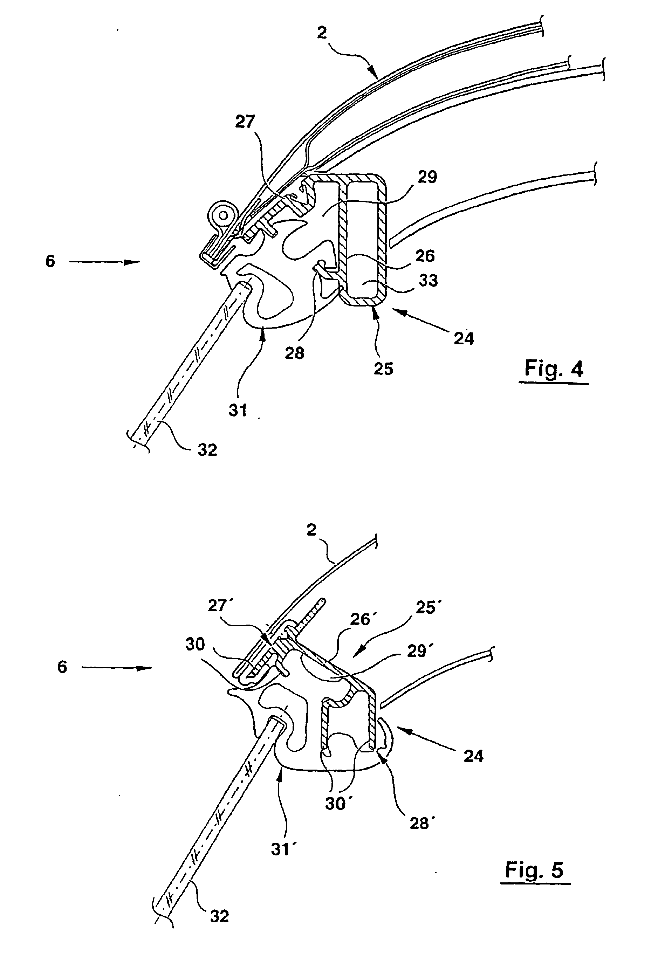

In Fig. 4 ist ein für den Bereich des Seitenrahmens 6 vorgesehenes Strangpreßprofilteil 24 in einer Querschnittsdarstellung veranschaulicht, wobei dieses Strangpreßprofilteil 24 als ein U-Profil 25 ausgebildet ist, daß in der dargestellten Einbaulage eine von einem Basisschenkel 26 und zwei nach unten gerichteten Halteschenkeln 27, 28 umgriffene Aufnahmekammer 29 aufweist. In der Aufnahmekammer 29 ist ein elastisches Dichtungsprofil 31 eingerastet, an dem in Schließstellung eine Seitenscheibe 32 anliegt.

Zur Erhöhung der Stabilität des U-Profils 25 ist dieses im Bereich seines Basisschenkels 26 mit einem in Längsrichtung eine Profilaussteifung bewirkenden Hohlprofilansatz 33 versehen, so daß mit geringem konstruktivem Aufwand das Strangpreßprofilteil 24 bei geringer Wandstärke eine hohe Steifigkeit aufweist.

In Fig. 5 ist eine zweite Ausführungsform des U-Profils 25' dargestellt, wobei dieses jeweilige Halteschenkel 27', 28' aufweist, die jeweils als eine Gabel mit zwei Profilzinken 30, 30' zur Abstützung des elastischen Dichtungsprofilkörpers 31' ausgebildet sind.

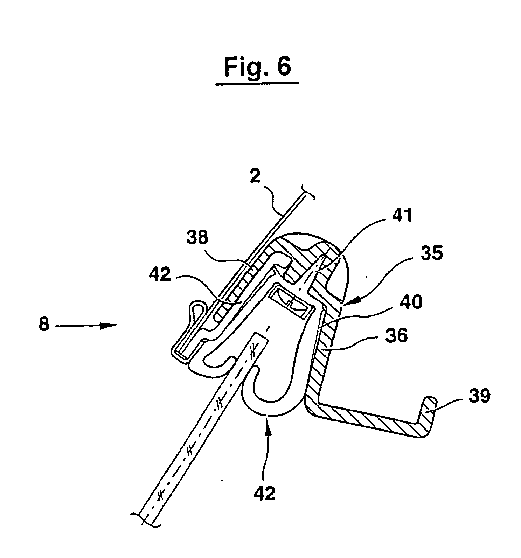

In Fig. 6 ist ein Strangpreßprofilteil 35 im Bereich der Hauptsäule 8 dargestellt, wobei dieses Teil 35 von einem einen gemeinsamen Mittelsteg 36 aufweisenden Doppel-U-Profil mit gegensinnig abragenden Außenschenkeln 38, 39 gebildet ist, wobei in einer in der dargestellten Einbaulage äußeren Aufnahmekammer 40 eine als elastisches Dichtungsprofil ausgebildete Seitenscheibenhalterung 42 über eine Schraubverbindung 41 festgelegt ist. Zur Festlegung der Dachhaut 2 ist in die Aufnahmekammer 40 zusätzlich ein den Endbereich der Dachhaut 2 erfassendes Stützteil 42 eingebracht.

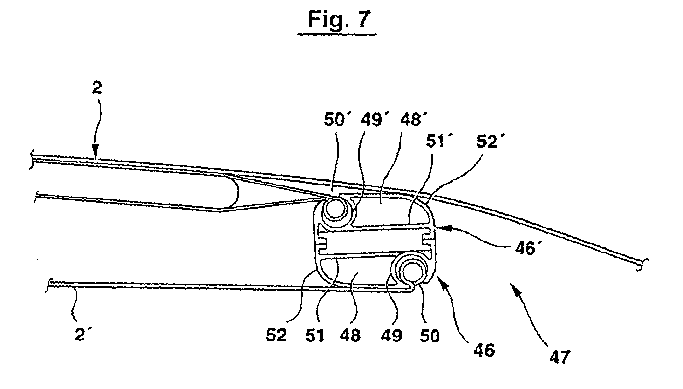

In Fig. 7 ist ein Stangpreßprofilteil 46 im Bereich des hinteren Dachhauptspriegels 47 (Fig. 1) dargestellt, wobei dieses Strangpreßprofilteil 46 von einem Hohlprofil 48 gebildet ist, in dessen Wandung als Aufnahmekammer eine Ringnut 49 mit einem Aufnahmeschlitz 50 vorgesehen ist. Das Hohlprofil 48 weist dabei eine Querschnittskontur auf, die ausgehend von einem geraden Basiswandteil 51 in einen die Dachhaut 2 in der dargestellten Einbaulage abstützenden bogenförmigen Stützwandteil 52 übergeht. In zweckmäßiger Ausführung ist der Dachhauptspriegel 47 mit zwei Hohlprofilen 48, 48' versehen, die im Bereich ihrer Basiswandteile 51, 51' aneinanderliegen.

Mit den vorbeschriebenen Ausführungsformen der Strangpreßprofilteile 15, 24, 35, 46 des Leichtbau-Verdeckgestells 1 ist eine weitgehende Funktionsintegration derart erreichbar, daß zusätzlich zu den dargestellten Verbindungspaarungen eine Aufnahme bzw. Befestigung von Teilen des Verdeckbezuges, von Verkleidungsteilen, Dichtungsteilen, Polsterteilen und dgl., möglich ist. Ebenso ist denkbar, die Strangpreßprofilteile und die vorbeschriebenen Verbindungspaarungen derart zu gestalten, daß aufwendige Klebeverbindungen vermieden sind, eine schnelle Auswechselung der Einzelbauteile möglich ist, weniger Einzelteile zu verarbeiten sind und damit das spezifische Gewicht des Verdeckgestells bei hinreichender Verwindungssteife insgesamt vorteilhaft zu verringern ist.

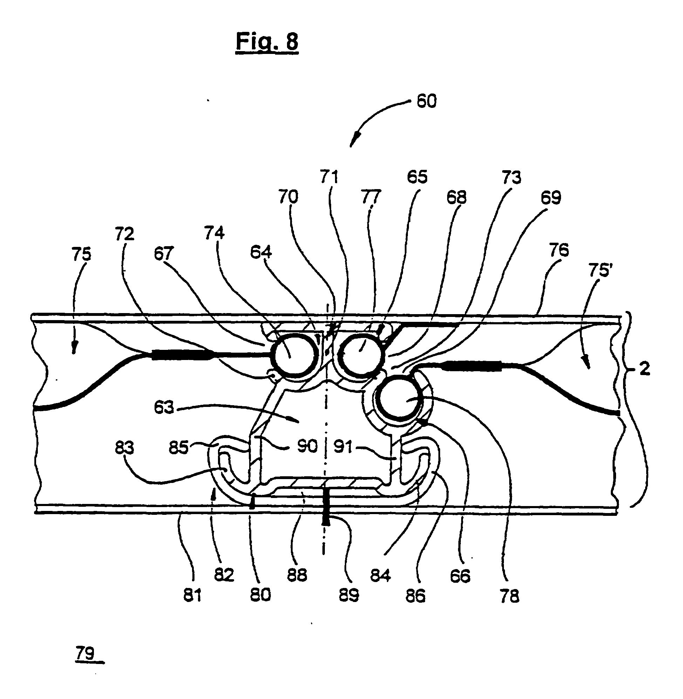

In Schließstellung des Verdeckgestells 1 ist ausgehend vom hinteren Dachhauptspriegel 47 auch der vordere Bereich der Verdeckdachhaut 2 von zwei sich im wesentlichen parallel zum Dachspitzenteil 13 erstreckenden Dachspriegeln 60 und 61 (Fig. 1) derart untergriffen, daß bei geschlossener Fahrweise des Cabriolet-Fahrzeugs eine konturstraffe Festlegung der Dachhaut 2 in Längs- und Querrichtung erreicht ist. Diese Dachspriegel 60 und 61 sind ebenfalls als Strangpreßprofile vorgesehen, die als im inneren Konturbereich ihres Querschnitts (Fig. 8) einen Freiraum aufweisende Hohlprofilteile 63 ausgebildet sind (Fig. 8 bis Fig. 11).

Das Hohlprofil 63 weist in einer ersten Ausführungsform gemäß Fig. 8 am Außenumfang drei im wesentlichen ringförmige Aufnahmekammern 64, 65 und 66 mit jeweiligen Aufnahmeschlitzen 67, 68 und 69 auf, wobei diese Querschnittsdarstellung verdeutlicht, daß das Hohlprofilteil 63 mit einem einerseits in Einbaulage die Verdeck-Dachhaut 2 untergreifenden T-förmigen Stützbereich 70 versehen ist, dessen Mittelschenkel 71 andererseits zwei Ansatzbögen 72, 73 aufweist, die Teil der im wesentlichen symmetrisch angeordneten Aufnahmekammern 64 und 65 sind. In der Aufnahmekammer 64 ist dabei ein mit einer Polstermatte 75 verbundener erster Klemmkeder 74 abgestützt und in die Aufnahmekammer 65 greift ein unmittelbar am Verdeckbezug 76 festgelegter Klemmkeder 77 ein.

Im Nahbereich der zweiten Aufnahmekammer 65 ist in der Wandungskontur des Hohlprofilteils 63 die dritte Aufnahmekammer 66 vorgesehen, in der ein dritter, am rückwärtigen Polstermattenbereich 75' angreifender Klemmkeder 78 eingeführt ist.

Diese dreifache Keder-Nut-Verbindung ermöglicht eine schnelle Montage der Dachhaut 2 an den Dachspriegeln 47, 60, 61 und auch eine Demontage der Verdeck-Dachhaut 2, beispielsweise zu einem separaten Wechsel von Einzelteilen des Verdeckgestells 1, ist nach einem Lösen der Klemmkeder mit vorteilhaft geringem Aufwand und ohne Materialzerstörung möglich. Die Querschnittsgeometrie des Hohlprofilteils 63 ist in einer kostengünstigen Stranguß- oder Strangzieh-Fertigung herstellbar, so daß danach die Dachspriegel 47, 60, 61 über die Steckverbindungen im Bereich der Klemmkeder 74, 77, 70 ohne zusätzliche Materialaufwendungen mit der Dachhaut 2 verbindbar sind. Zu dieser Verbindungsherstellung sind beispielsweise Klebstoffe oder dgl., als Verbindungsmittel entbehrlich.

Gleichzeitig sind die für die Verbindungsbereiche vorgesehenen Materialien der Verdeck-Dachhaut 2, beispielsweise beschichtete Textilien für den Verdeckbezug 76 und/oder PVC-Profile im Bereich der Klemmkeder 74, 77 und 78, jeweils optimal so ausgewählt, daß bei Belastung dieser mehrlagigen Dachhaut 2 auch bei extrem unterschiedlichen Klimagegebenheiten eine hohe Lebensdauer erreicht ist, die wechselnde Einwirkung hoher Zug- und Druckkräfte in den Verbindungsbereichen keine Materialermüdungen bewirkt und damit diese Verbindungskonstruktion gegenüber herkömmlichen Klebeverbindungen insgesamt verbessert ist.

Das Hohlprofil 63 ist auf seiner in Einbaulage zum Fahrzeuginnenraum 79 gerichteten Unterseite mit einem Verbindungsprofil 80 versehen, an dem zumindest ein mit dem Innenhimmel 81 verbundenes Gegenglied 82 festlegbar ist. In zweckmäßiger Ausführung ist das Verbindungsprofil 80 mit zwei bogenförmig nach oben verlaufenden Hakenteilen 83, 84 versehen, an denen das Gegenglied 82 mit jeweiligen Rastschenkeln 85, 86 abgestützt ist.

Im Bereich dieser Verbindung des Innenhimmels 81 weist das Hohlprofil 63 zum Gegenglied 82 hin eine dessen Anlagefläche am Innenhimmel 81 verringernde Nutform 88 auf, so daß in diesem Anlagebereich eine geringfügige Lageverschiebung des Innenhimmels 81 über das Gegenglied 82 aufnehmbar ist. Das Gegenglied 82 ist in zweckmäßiger Ausführung am Innenhimmel 81 über eine Verbindungsnaht 89 festgelegt.

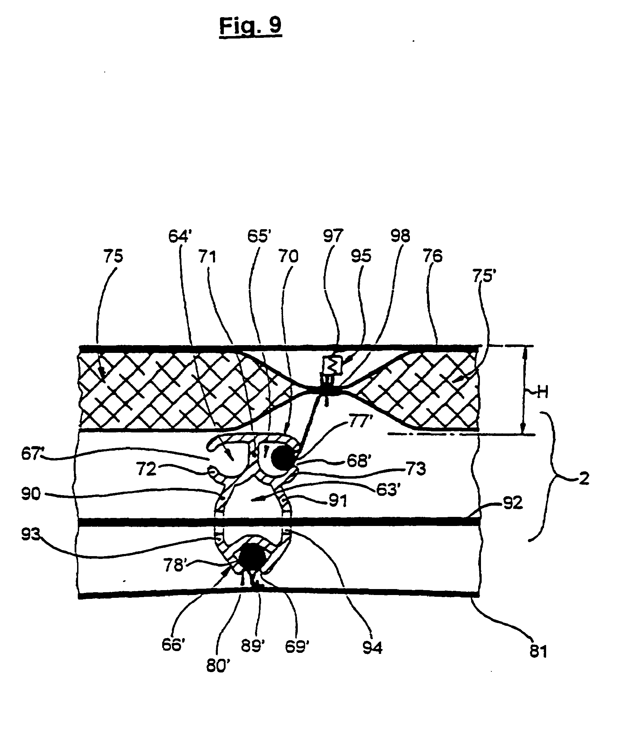

In Fig. 9 bis Fig. 11 sind weitere vorteilhafte Ausführungsformen des erfindungsgemäßen Hohlprofilteils 63', 63'', 63''' dargestellt, wobei diese in einem Abstand H zu dem oberseitigen Verdeckstoff 76 derart in die Verdeck-Dachhaut 2 integriert sind, daß eine unterhalb der Polstermatte 75, 75' befindliche Abdeckstellung erreicht ist. In der Schließstellung des Verdeckgestells 1 ist damit der Verdeckstoff 76 nicht auf dem T-förmigen Stützbereich 70 der Hohlprofilteile 63', 63'', 63''' aufgelegt, so daß ungewollte Deformationen in Form einer die Dachspriegel 47, 60, 61 nachformenden Wellung mit hinreichender Sicherheit vermieden sind und der optimale Gesamteindruck der Dachhaut 2 durch einen gleichmäßig ebenen Verdeckbezug 76 bestimmt ist.

Das Hohlprofilteil 63' gemäß Fig. 9 weist im Bereich des Verbindungsprofils 80' die dritte Aufnahmekammer 66' auf, wobei in dieser ein mit dem Dachhimmel 81 verbundener Klemmkeder 78' festgelegt ist. Die Aufnahmekammer 64' ist in dieser Ausführungsform freibleibend dargestellt, wobei denkbar ist, hier ein weiteres Befestigungselement in Längsrichtung der Aufnahmekammer 64' einzuschieben.

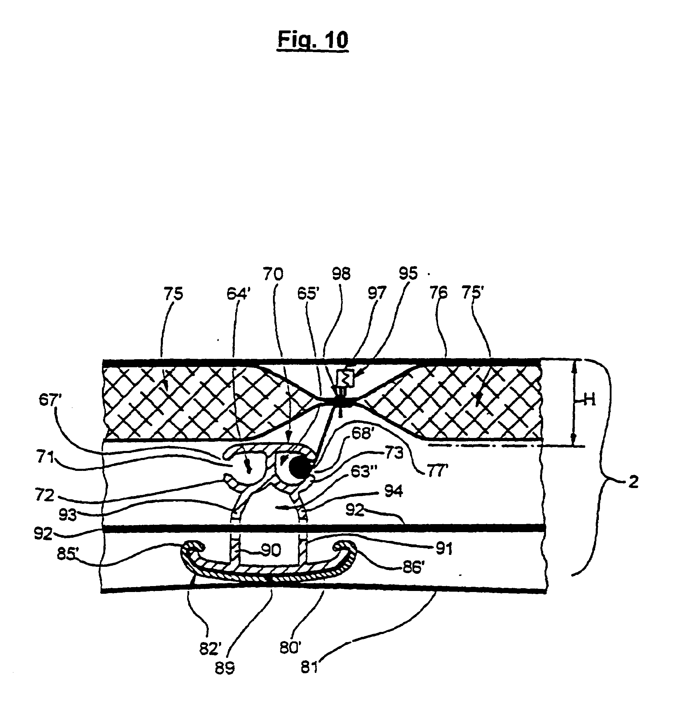

In sämtlichen Ausführungsformen des Hohlprofilteils 63, 63', 63'', 63''' ist das Verbindungsprofil 80, 80' über zwei im wesentlichen parallele Verbindungsschenkel 90, 91 mit dem unteren Wandungsbereich der Aufnahmekammer 64, 65 bzw. 64', 65' verbunden. In den Ausführungsformen gemäß Fig. 9 und Fig. 10 sind die Verbindungsschenkel 90, 91 mit jeweiligen Durchlaßöffnungen 93, 94 versehen, so daß in diesem Bereich ein Spanngurt 92 als zusätzliches Sicherungs- und Aussteifungsteil in die Verdeckkonstruktion integriert werden kann.

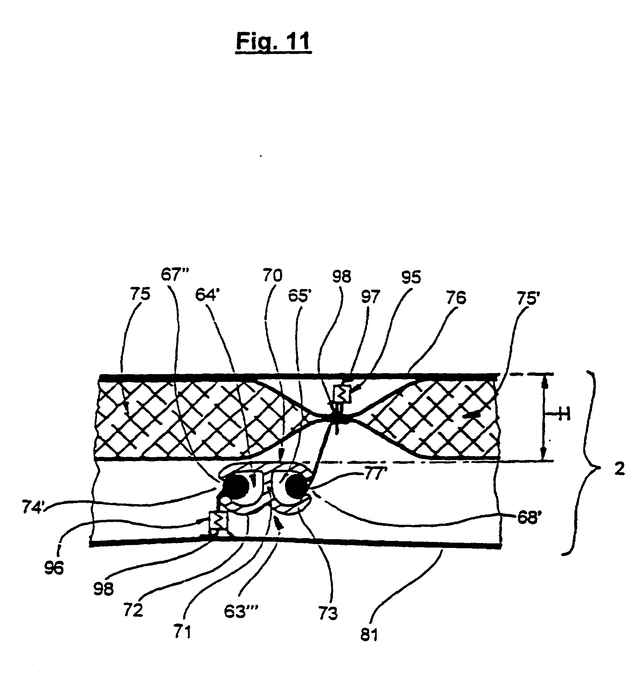

In einer weiteren zweckmäßigen Ausbildung der Verbindungsbereiche der Dachhaut 2 bzw. deren Einzellagen mit den Hohlprofilteilen 63', 63'' und 63''' sind in deren Nahbereich jeweilige Reißverschlußteile 95 (Fig. 9 bis 11) und 96 (Fig. 11) vorgesehen, mit denen sowohl die Montage als auch die Demontage der dargestellten Befestigungsanbindungen mit geringem Aufwand weiter verbessert ist. Bei der Erstmontage der jeweiligen Klemmkeder 74, 77, 78; 74'; 77', 78' werden diese beispielsweise in Längsrichtung der Dachspriegel 47, 60, 61 in die vorbeschriebenen Aufnahmekammern eingeschoben, so daß danach mit einer die Aufnahmeschlitze durchgreifenden Verbindungsfahne die Klemmkeder in der dargestellten Form mit den Polstermatten 75, 75' bzw. den Reißverschlüssen 95, 96 verbunden werden können. In diesen Verbindungsbereichen sind in zweckmäßiger Ausführung Schweißnähte (HF-Schweißung) vorgesehen und bei der Montage bzw. Demontage sind Teilbereiche der Dachhaut 2 durch die einfach zu verbindenden bzw. zu lösenden Reißverschlußteile 95, 96 problemlos zugänglich.

In den Ausführungsformen gemäß Fig. 9 und 10 ist das Reißverschlußteil 95 einerseits über eine Verbindungsnaht 97 am Verdeckbezug 76 festgelegt und andererseits über eine Verbindungsnaht 98 mit dem Klemmkeder 77' verbunden. Die Ausführungsform gemäß Fig. 11 weist sowohl das Reißverschlußteil 95 als auch ein zweites Reißverschlußteil 96 auf, wobei dieses über eine Verbindungsnaht 98 den Innenhimmel 81 in straffer Einbaulage mit dem Klemmkeder 74' am Doppelkammer-Hohlprofilteil 63''' festlegt.

Die vorbeschriebenen Keder-Nut-Verbindungen sind in zweckmäßiger Ausführung mit in Profillängsrichtung durchlaufenden Aufnahmeschlitzen 67, 68, 69; 67', 68', 69', 67'', 68'' versehen, wobei ebenfalls denkbar ist, die jeweiligen Hohlprofilteile in Längsrichtung mit bereichsweisen Schlitzen (nicht dargestellt) zu versehen, in die über entsprechende Öffnungserweiterungen die Klemmkeder eingeschoben und über eine Verschiebung in Längsrichtung in die vorgesehene Einbaulage positioniert werden können.

## Patentansprüche

1. Cabriolet-Fahrzeug, dessen vorzugsweise eine faltbare Verdeck-Dachhaut (2) tragendes Verdeckgestell (1) mit einem Dachhauptspriegel (47), mit dem Dachhauptspriegel (47) vorgeordneten Dachspriegeln (60, 61) und mit symmetrisch zur Fahrzeuglängsachse (3) angeordneten, aus vorderen und hinteren Teilstücken (4, 6) bestehenden Seitenrahmenteilen versehen ist, die jeweils einenends über eine Hauptsäule (8) und eine Hauptführungsstange (9) schwenkbeweglich an einem hinteren Hauptlager (10) der Fahrzeugkarosserie (11) abgestützt und anderenends über ein in Schließstellung am oberen Querholm eines Windschutzscheibenrahmens anlegbares Dachspitzenteil verbunden sind, wobei das Verdeckgestell (1) aus Strangpreßprofilteilen (15, 24, 35, 46, 60, 61) besteht, die Strangpreßprofilteile (15, 24, 35, 46, 60, 61) in ihrer Querschnittskontur zumindest teilweise mit Aufnahmekammern (19, 19', 20', 21', 29, 29', 40, 49', 64, 65, 66) und/oder Haltestege (20, 27, 28, 38, 39, 83, 84) bildenden Aufnahmeprofilen ausgebildet sind, an denen jeweilige Gegenglieder (23, 23', 74, 77, 78) der Verdeckdachhaut (2) und/oder zugeordneter Bauteile (22, 31, 31', 80), z.B. in Gestalt einer Polstermatte (75, 75'), eines Reißverschlußteiles (95, 96), eines inneren Dachhimmels (81), eines Dichtigungsprofilkörpers (31, 31'), einer Seitenscheibenhalterung (42) und/oder eines Verkleidungsteils, durch einen formschlüssigen Verbindungseingriff lösbar festgelegt sind, wobei jedoch die Strangpreßprofilteile als Dachspriegel (60, 61) in ihrer Querschnittskontur zumindest teilweise mit Aufnahmekammern (64, 65, 66) und mit Haltestegen (83, 84) bildenden Aufnahmeprofilen ausgebildet sind.

2. Cabriolet-Fahrzeug nach Anspruch 1, **dadurch gekennzeichnet, daß** die Strangpreßprofilteile (15, 24, 35, 46, 60, 61) und/oder das als Halteteil (23') vorgesehene Gegenglied eine Hinterschneidung aufweist.

3. Cabriolet-Fahrzeug nach Anspruch 1 oder 2, **dadurch gekennzeichnet, daß** die Strangpreßprofilteile (15, 24, 35, 46, 60, 61) ein ganz oder überwiegend aus Aluminium bestehendes Leichtbautragwerk bilden.

4. Cabriolet-Fahrzeug nach einem der Ansprüche 1 bis 3, **dadurch gekennzeichnet, daß** das Strangpreßprofilteil (15) für den Bereich der Dachspitze (13) im Querschnitt als Hohlprofil (16) ausgebildet ist, dessen eine vordere Formnase (18) bildende Wandung (17) in Einbaulage von einer ein- oder mehrlagigen Dachhaut (2) übergriffen ist.

5. Cabriolet-Fahrzeug nach Anspruch 4, **dadurch gekennzeichnet, daß** das Hohlprofil (16) an seinem Außenumfang mit mehreren nach innen gerichteten Aufnahmekammern (19, 19'; 20'; 21) und/oder nach außen vorstehenden Haltestegen (20) versehen ist.

6. Cabriolet-Fahrzeug nach einem oder mehreren der Ansprüche 1 bis 4, **dadurch gekennzeichnet, daß** die Strangpreßprofilteile (24) im Bereich des Seitenrahmens (6, 7) jeweils als U-Profil (25; 25') ausgebildet sind, das in Einbaulage eine von einem Basisschenkel (26; 26') und zwei nach unten gerichteten Halteschenkeln (27, 28; 27', 28') umgriffene Aufnahmekammer (29; 29') ausbildet.

7. Cabriolet-Fahrzeug nach Anspruch 6, **dadurch gekennzeichnet, daß** das U-Profil (25) im Bereich seines Basisschenkels (26) mit einem diesen in Längsrichtung aussteifenden Hohlprofilansatz (33) versehen ist.

8. Cabriolet-Fahrzeug nach Anspruch 6 oder 7, **dadurch gekennzeichnet, daß** die Halteschenkel (27', 28') jeweils als Gabel mit zwei Profilzinken (30, 30') ausgebildet sind.

9. Cabriolet-Fahrzeug nach einem oder mehreren der Ansprüche 1 bis 8, **dadurch gekennzeichnet, daß** das Strangpreßprofilteil (35) im Bereich der Hauptsäule (8) von einem einen gemeinsamen Mittelsteg (36) aufweisenden Doppel-U-Profil mit gegensinnig abragenden Außenschenkeln (38, 39) gebildet ist und die in Einbaulage äußere Aufnahmekammer (40) mit einer Seitenscheibenhalterung (42) versehen ist.

10. Cabriolet-Fahrzeug nach einem oder mehreren der Ansprüche 1 bis 9, **dadurch gekennzeichnet, daß** das Strangpreßprofilteil (46) im Bereich eines hinteren Dach-Hauptspriegels (47) von einem Hohlprofil (48; 48') gebildet ist, in dessen Wandung als Aufnahmekammer eine Ringnut (49; 49') mit Aufnahmeschlitz (50; 50') vorgesehen ist.

11. Cabriolet-Fahrzeug nach Anspruch 10, **dadurch gekennzeichnet, daß** das Hohlprofil (48; 48') eine Querschnittskontur aufweist, die ausgehend von einem geraden Basiswandteil (51; 51') in einen in Einbaulage die Dachhaut (2) abstützenden bogenförmigen Stützwandteil (52; 52') übergeht.

12. Cabriolet-Fahrzeug nach Anspruch 10 oder 11, **dadurch gekennzeichnet, daß** der Dach-Hauptspriegel (47) in Einbaulage zwei im Bereich ihrer Basiswandteile (51; 51') aneinanderliegende Hohlprofile (48; 48') aufweist.

13. Cabriolet-Fahrzeug nach einem oder mehreren der Ansprüche 1 bis 12, **dadurch gekennzeichnet, daß** zumindest einer von vorderen Dachspriegeln (60, 61) jeweils als einstückiges, mehrkammeriges Hohlprofilteil (63, 63', 63", 63''') ausgebildet ist, das zumindest zwei im wesentlichen ringförmige Aufnahmekammern (64, 65, 66, 64', 65', 66') mit wenigstens jeweils einem Aufnahmeschlitz (67, 68, 69, 67', 68', 69', 67", 68") aufweist.

14. Cabriolet-Fahrzeug nach Anspruch 13, **dadurch gekennzeichnet**, in den Aufnahmekammern (64, 65, 66; 64', 65', 66') jeweilige am Verdeckbezug (76) und/oder einer mit diesem verbundenen Polstermatte (75, 75') und/oder einem Innenhimmel (81) angreifende Klemmkeder (74, 77, 78; 74'; 77', 78') abgestützt sind.

15. Cabriolet-Fahrzeug nach Anspruch 13 oder 14, **dadurch gekennzeichnet, daß** das Hohlprofilteil (63', 63", 63"') in einem Abstand (H) zu einem oberseitigen Verdeckstoff (76) in die Verdeck-Dachhaut (2) integriert ist, derart, daß das Hohlprofilteil (63'; 63"; 63''') eine unterhalb der Polstermatte (75, 7.5') verlaufende Abdeckstellung einnimmt.

16. Cabriolet-Fahrzeug nach einem der Ansprüche 13 bis 15, **dadurch gekennzeichnet, daß** das Hohlprofilteil (63; 63'; 63"; 63''') mit einem T-förmigen Stützbereich (70) versehen ist, dessen Mittelschenkel (71) fußseitig in zwei Ansatzbögen (72, 73) übergeht, die Teil der zwei im wesentlichen symmetrisch angeordneten Aufnahmekammern (64, 65; 64', 65') sind.

17. Cabriolet-Fahrzeug nach einem der Ansprüche 13 bis 16, **dadurch gekennzeichnet, daß** das Hohlprofilteil (63) im Nahbereich seiner beiden Aufnahmekammern (64, 65) eine dritte Aufnahmekammer (66) aufweist, in der ein an einem Randbereich der Polstermatte (75') angreifender Klemmkeder (78) festgelegt ist.

18. Cabriolet-Fahrzeug nach einem der Ansprüche 13 bis 17, **dadurch gekennzeichnet, daß** das Hohlprofilteil (63; 63") auf seiner in Einbaulage zum Fahrzeuginnenraum (79) gerichteten Unterseite ein Verbindungsprofil (80; 80') aufweist, an dem zumindest ein mit dem Innenhimmel (81) verbundenes Gegenglied (82; 82') festlegbar ist.

19. Cabriolet-Fahrzeug nach einem der Ansprüche 13 bis 18, **dadurch gekennzeichnet, daß** als das Verbindungsprofil (80) zwei bogenförmig nach oben verlaufende Hakenteile (83, 84) vorgesehen sind, an denen das einstückige Gegenglied (82) mit jeweiligen Rastschenkeln (85, 86) abgestützt ist.

20. Cabriolet-Fahrzeug nach einem der Ansprüche 13 bis 19, **dadurch gekennzeichnet, daß** das Hohlprofilteil (63) im Verbindungsbereich zum Gegenglied (82) eine dessen Anlagefläche verringernde Nutform (88) aufweist.

21. Cabriolet-Fahrzeug nach einem der Ansprüche 13 bis 20, **dadurch gekennzeichnet, daß** das Verbindungsprofil (80; 80') über zwei im wesentlichen parallele Verbindungsschenkel (90, 91) mit dem unteren Wandungsbereich der Aufnahmekammern (64, 65; 64', 65') verbunden ist.

22. Cabriolet-Fahrzeug nach einem der Ansprüche 13 bis 21, **dadurch gekennzeichnet, daß** der in der mittleren Aufnahmekammer (65) des Hohlprofilteils (63) abgestützte Klemmkeder (77) anderenends unmittelbar mit dem Verdeckbezug (76) verbunden ist.

23. Cabriolet-Fahrzeug nach einem der Ansprüche 13 bis 22, **dadurch gekennzeichnet, daß** die beiden äußeren Klemmkeder (74, 78) jeweils an Teilbereichen der Polstermatte (75, 75') angreifen.

24. Cabriolet-Fahrzeug nach einem der Ansprüche 13 bis 23, **dadurch gekennzeichnet, daß** der Innenhimmel (81) mit dem Gegenglied (82) über eine Naht (89) verbunden ist.

25. Cabriolet-Fahrzeug nach einem der Ansprüche 13 bis 24, **dadurch gekennzeichnet, daß** das Hohlprofilteil (63') im Bereich des Verbindungsprofils (80') die dritte Aufnahmekammer (66') aufweist und in diese ein mit dem Dachhimmel (81) verbundener Klemmkeder (78') eingreift.

26. Cabriolet-Fahrzeug nach einem der Ansprüche 13 bis 25, **dadurch gekennzeichnet, daß** das Hohlprofilteil (63', 63") im Bereich der Verbindungsschenkel (90, 91) jeweils eine von einem Spanngurt (92) durchgriffene Durchlaßöffnung (93, 94) aufweist.

27. Cabriolet-Fahrzeug nach einem der Ansprüche 13 bis 26, **dadurch gekennzeichnet, daß** die Polstermatten (75, 75') und/oder der Innenhimmel (81) im Nahbereich des Hohlprofilteils (63', 63", 63''') über ein Reißverschlußteil (95, 96) mit dem jeweiligen Klemmkeder (74'; 77') verbunden sind.

28. Cabriolet-Fahrzeug nach einem der Ansprüche 13 bis 27, **dadurch gekennzeichnet, daß** das Reißverschlußteil (95, 96) über eine Verbindungsnaht (97, 98) am Verdeckbezug (76) oder am Innenhimmel (81) gehaltert ist

## Claims

1. Convertible vehicle, the frame (1) of whose folding top preferably carries a foldable roof skin (2) belonging to the folding top and is provided with a main roof bow (47), with roof bows (60, 61) positioned in front of the main roof bow (47), and with lateral frame parts which are disposed symmetrically to the longitudinal axis (3) of the vehicle and comprise front and rear portions (4, 6) and each of which is supported at one end by a main upright (8) and a main directing bar (9) to be movable by pivoting on a rear main mounting (10) on the vehicle body (11), and which at the other end are connected by a roof tip part which can, in its closed position, be applied to the top cross-member of a windscreen frame, the frame (1) of the folding top comprising parts (15, 24, 35, 46, 60, 61) formed by extruded profiles, at least part of the outline in cross-section of the parts (15, 24, 35, 46, 60, 61) formed by extruded profiles being formed to have receiving chambers (19, 19', 20', 21, 29, 29', 40, 49', 64, 65, 66) and/or retaining webs (20, 27, 28, 38, 39, 83, 84) to which respective mating members (23, 23', 74, 77, 78) on the roof skin (2) of the folding top and/or on associated components (22, 31, 31', 80), e.g. in the form of a slab of padding (75, 75'), a sliding-clasp-fastener part (95, 96), an inner roof lining (81), a profiled sealing member (31, 31'), a support (42) for a side window, and/or a trim part, are detachably fastened by positive connecting interengagement, but at least part of the outline in cross-section of the parts formed by extruded profiles which form roof bows (60, 61) being formed to have receiving chambers (64, 65, 66), and receiving profiles forming retaining webs (83, 84).

2. Convertible vehicle according to claim 1, **characterised in that** the parts (15, 24, 35, 46, 60, 61) formed by extruded profiles and/or the mating member provided as a retaining part (23') have an undercut.

3. Convertible vehicle according to claim 1 or 2, **characterised in that** the parts (15, 24, 35, 46, 60, 61) formed by extruded profiles form a lightweight supporting structure composed wholly or predominantly of aluminium.

4. Convertible vehicle according to one of claims 1 to 3, **characterised in that**, in cross-section, the part (15) formed by an extruded profile for the region of the roof tip (13) is in the form of a hollow profile (16) of which the wall (17) which forms a front, shaped nose (18) has a single-ply or multi-ply roof skin (2) fitted round it in the installed position.

5. Convertible vehicle according to claim 4, **characterised in that** the hollow profile (16) is provided on its outer periphery with a plurality of inwardly directed receiving chambers (19, 19'; 20, 21) and/or outwardly projecting retaining webs (20).

6. Convertible vehicle according to one or more of claims 1 to 4, **characterised in that** the parts (24) formed by extruded profiles in the region of the lateral frame (6, 7) are each in the form of U-profiles (25, 25') which, in the installed position, form a receiving chamber (29, 29') which is enclosed by a base limb (26, 26') and two downwardly directed retaining arms (27, 28; 27', 28').

7. Convertible vehicle according to claim 6, **characterised in that**, in the region of its base limb (26), the channel profile (25) is provided with an extension in the form of a hollow profile (33) which stiffens it in the longitudinal direction.

8. Convertible vehicle according to claim 6 or 7, **characterised in that** retaining arms (27', 28') are each in the form of forks having two profiled tines (30, 30').

9. Convertible vehicle according to one or more of claims 1 to 8, **characterised in that** the part (35) formed by an extruded profile in the region of the main upright (8) is formed by a profile in the form of a double-U having a common central web (36) and outer webs (38, 39) projecting in opposite directions, and the receiving chamber (40) which is on the outside in the installed position is provided with a support (42) for a side window.

10. Convertible vehicle according to one or more of claims 1 to 9, **characterised in that** the part (46) formed by an extruded profile in the region of a rear main roof bow (47) is formed by a hollow profile (48, 48') in the wall of which is provided an annular groove (49, 49') having a receiving slot (50, 50'), to form a receiving chamber.

11. Convertible vehicle according to claim 10, **characterised in that** the cross-sectional outline of the hollow profile (48, 48') is one which, starting from a straight base-wall part (51, 51') continues into an arcuate supporting-wall part (52, 52') which, in the installed position, supports the roof skin (2).

12. Convertible vehicle according to claim 10 or 11, **characterised in that** in the installed position the main roof bow (47) has two hollow profiles (48, 48') which bear against one another in the region of their base-wall parts (51,51').

13. Convertible vehicle according to one or more of claims 1 to 12, **characterised in that** at least one of the front roof bows (60, 61) is in the form of a one-piece multi-chamlsered part formed by a hollow profile (63, 63', 63", 63"'), which has at least two substantially annular receiving chambers (64, 65, 66; 64', 65', 66') each having at least one receiving slot (67, 68, 69; 67', 68', 69'; 67", 68").

14. Convertible vehicle according to claim 13, **characterised in that** clamping strips (74, 77, 78; 74', 77', 78') which respectively engage with the roof covering (76) and/or with a slab of padding (75, 75') connected thereto and/or with an inner roof lining (81) are supported in the receiving chambers (64, 65, 66; 64', 65', 66').

15. Convertible vehicle according to claim 13 or 14, **characterised in that** the part (63', 63", 63''') formed by a hollow profile is fitted into the roof skin (2) of the folding top at a distance (H) from a material (76) forming the top side of the folding top, in such a way that the part (63', 63", 63''') formed by a hollow profile occupies a concealed position extending below the slab of padding (75, 75').

16. Convertible vehicle according to one of claims 13 to 15, **characterised in that** the part (63, 63', 63", 63"') formed by a hollow profile is provided with a T-shaped supporting region (70) of which the centre web (71) continues at its foot end into two arcuate projections (72, 73) which are part of the two substantially symmetrically disposed receiving chambers (64, 65; 64', 65')

17. Convertible vehicle according to one of claims 13 to 16, **characterised in that** the part (63) formed by a hollow profile has in the vicinity of its two receiving chambers (64, 65) a third receiving chamber (66) in which a clamping strip (78) which engages with an edge region of the slab of padding (75') is fastened.

18. Convertible vehicle according to one of claims 13 to 17, **characterised in that** the part (63, 63") formed by a hollow profile has, on its underside which is directed towards the interior (79) of the vehicle when it is in the installed position, a connecting profile (80, 80') to which at least one mating member (82, 82') connected to the inner roof lining (81) can be fastened.

19. Convertible vehicle according to one of claims 13 to 18, **characterised in that** what is provided as the connecting profile (80) is two hooked parts (83, 84) which extend upwards in an arc and on which the one-piece mating member (82) is supported by respective latch-on arms (85, 86).

20. Convertible vehicle according to one of claims 13 to 19, **characterised in that**, in the region where it is connected to the mating member (82), the part (63) formed by a hollow profile is of a grooved form (88) which reduces the area of the mating member (82) which is in contact.

21. Convertible vehicle according to one of claims 13 to 20, **characterised in that** the connecting profile (80, 80') is connected to the region forming the bottom wall of the receiving chambers (64, 65, 64', 65') by two substantially parallel connecting webs (90, 91).

22. Convertible vehicle according to one of claims 13 to 21, **characterised in that** the clamping strip (77) which is supported in the centre receiving chamber (65) of the part (63) formed by a hollow profile is connected, at its other end, directly to the roof covering (76).

23. Convertible vehicle according to one of claims 13 to 22, **characterised in that** the two outer clamping strips (74, 78) engage respective sub-regions of the slab of padding (75, 75').

24. Convertible vehicle according to one of claims 13 to 23, **characterised in that** the inner roof lining (81) is connected to the mating member (82) by a seam (89) which may be sewn.

25. Convertible vehicle according to one of claims 13 to 24, **characterised in that** the part (63') formed by a hollow profile has the third receiving chamber (66') in the region of the connecting profile (80'), and a clamping strip (78') which is connected to the roof lining (81) engages in this third receiving chamber (66').

26. Convertible vehicle according to one of claims 13 to 25, **characterised in that** the part (63, 63") formed by a hollow profile has, in the region of each of the connecting arms (90, 91), an aperture (93, 94) through which a tensioning strap (92) passes.

27. Convertible vehicle according to one of claims 13 to 26, **characterised in that**, in the vicinity of the part (63', 63", 63''') formed by a hollow profile, the slabs of padding (75, 75') and/or the inner roof lining (81) are connected to the respective clamping strips (74', 77') by a sliding-clasp-fastener part (95, 96).

28. Convertible vehicle according to one of claims 13 to 27, **characterised in that** the sliding-clasp-fastener part (95, 96) is mounted on the roof covering (76) or the inner roof lining (81) by a connecting seam (97, 98) which may be sewn.

## Revendications

1. Véhicule cabriolet dont l'ossature (1) du toit ouvrant qui porte la capote (2) de préférence pliante, comporte un arceaux principal (47), des arceaux (60, 61) en amont de l'arceau principal (47), et des parties latérales d'ossature disposées symétriquement par rapport à l'axe longitudinal (3) du véhicule et formées de pièces avant et arrière (4, 6), ces parties latérales étant appuyées de manière articulée à une extrémité par une colonne principale (8) et par une barre de guidage principal (9), à un palier principal arrière (10) de la carrosserie (11) du véhicule, et reliées à l'autre extrémité, à une traverse de sommet de toit qui en position de fermeture s'applique contre la traverse supérieure du châssis du pare-brise, l'ossature (1) du toit ouvrant étant formée de pièces de profilé extrudé (15, 24, 35, 46, 60, 61), ces pièces de profilé extrudé (15, 24, 35, 46, 60, 61) formant par le contour de leur section, au moins en partie des chambres de réception (19, 19', 20', 21, 29, 29', 40, 49, 49', 64, 65, 66) et/ou des profils de réception en forme de nervures de fixation (20, 27, 28, 38, 39, 83, 84), auxquelles on fixe de façon amovible par une liaison de forme, des éléments complémentaires (23, 23', 74, 77, 78) de la capote (2) du toit et/ou des pièces associées (22, 31, 31', 80), par exemple en forme de nappe de rembourrage (75, 75'), de pièce d'accrochage (95, 96), d'un pavillon intérieur (81), d'un profil d'étanchéité (31, 31'), d'un support (42) de vitre latérale et/ou d'un habillage, dans lequel ce sont les pièces de profilé extrudé constituant les arceaux (60, 61) qui ont leur contour de section muni au moins en partie de chambres de réception (64, 65 66) et de profils de nervures de fixation (83, 84).

2. Véhicule cabriolet selon la revendication 1,
**caractérisé en ce que**
les pièces de profilé extrudé (15, 24, 35, 46, 60, 61) et/ou l'élément complémentaire prévu comme pièce de fixation (23') présentent une partie en contredépouille.

3. Véhicule cabriolet selon l'une quelconque des revendications 1 ou 2,
**caractérisé en ce que**
les pièces de profilé extrudé (15, 24, 35, 46, 60, 61) forment une construction légère totalement ou principalement en aluminium.

4. Véhicule cabriolet selon l'une quelconque des revendications 1 à 3,
**caractérisé en ce que**
la pièce de profilé extrudé (15) pour la zone du sommet de toit (13) a une section de profilé creux (16) dont une paroi (17) qui forme un bec avant (18) est enveloppée en position de montage par une capote (2) à une ou plusieurs couches.

5. Véhicule cabriolet selon la revendication 4,
**caractérisé en ce que**
le profilé creux (16) comporte à sa périphérie extérieure, plusieurs chambres de réception (19, 19', 20', 21) dirigées vers l'intérieur et/ou des nervures de fixation (20) en saillie vers l'extérieur.

6. Véhicule cabriolet selon l'une quelconque des revendications 1 à 4,
**caractérisé en ce que**
les pièces de profilé extrudé (24) dans la zone du cadre latéral (6, 7) sont réalisées chaque fois sous la forme de profilés en U (25, 25') qui, en position de montage ont une chambre de réception (29, 29') entourée par une branche de base (26, 26') et deux branches de fixation dirigées vers le bas (27, 28, 27', 28').

7. Véhicule cabriolet selon la revendication 6,
**caractérisé en ce que**
dans la zone de sa branche de base (26), le profilé en U (25) comporte un prolongement de profilé creux (33) qui le rigidifie dans la direction longitudinale.

8. Véhicule cabriolet selon l'une quelconque des revendications 6 ou 7,
**caractérisé en ce que**
les branches de fixation (27', 28') sont chaque fois réalisées sous la forme de fourches avec deux dents de profilé (30, 30').

9. Véhicule cabriolet selon l'une quelconque des revendications 1 à 8,
**caractérisé en ce que**
la partie de profilé extrudé (35) au niveau de la colonne principale (8) est formée par un profilé en double U ayant une branche médiane commune (36) et des branches extérieures (38, 39) dirigées en sens opposé, et en position de montage, la chambre de réception extérieure (40) comporte une fixation de vitre latérale (42).

10. Véhicule cabriolet selon l'une quelconque des revendications 1 à 9,
**caractérisé en ce que**
la pièce de profilé extrudé (46) au niveau de l'arceau arrière (47) est réalisée par un profilé creux (48, 48') dont la paroi constitue une chambre de réception avec une rainure annulaire (49, 49') munie d'une fente de réception (50, 50').

11. Véhicule cabriolet selon la revendication 10,
**caractérisé en ce que**
le profilé creux (48, 48') a un contour de section qui, partant d'une partie de paroi de base droite (51, 51') rejoint une partie de paroi d'appui (52, 52'), de forme arquée, qui soutient la capote (2) en position de montage.

12. Véhicule cabriolet selon l'une quelconque des revendications 10 ou 11,
**caractérisé en ce que**
l'arceau principal (47) du toit comporte en position de montage, deux profilés creux (48, 48') juxtaposés au niveau de leur partie de paroi de base (51, 51').

13. Véhicule cabriolet selon l'une quelconque des revendications 1 à 12,
**caractérisé en ce qu'**
au moins l'un des arceaux avant (60, 61) est réalisé sous la forme d'une pièce de profilé creux (63, 63', 63", 63''') en un seul morceau et à plusieurs chambres, ayant au moins deux chambres de réception essentiellement annulaires (64, 65, 66, 64', 65', 66') avec au moins une fente de réception (67, 68, 69, 67', 68', 69', 67", 68").

14. Véhicule cabriolet selon la revendication 13,
**caractérisé en ce que**
dans les chambres de réception (64, 65, 66, 64', 65', 66'), on loge des bourrelets de pincement (74, 77, 78, 74', 77', 78'), fixés au revêtement (76) et/ou à une nappe de rembourrage (75, 75') reliée à ce revêtement et/ou à un pavillon intérieur (81).

15. Véhicule cabriolet selon l'une quelconque des revendications 13 ou 14,
**caractérisé en ce que**
la pièce de profilé creux (63', 63", 63''') est intégrée dans la capote (2) à une distance (H) par rapport à la nappe supérieure (76) de la capote de façon que la partie de profilé creux (63', 63", 63''') prenne une position de recouvrement passant sous la nappe rembourrée (75, 75').

16. Véhicule cabriolet selon l'une quelconque des revendications 13 à 15,
**caractérisé en ce que**
la pièce de profilé creux (63, 63', 63", 63''') est munie d'une zone d'appui (70) en forme de T dont la branche médiane (71) est munie à sa base de deux prolongements en forme d'arc (72, 73) qui font partie des deux chambres de réception (64, 65, 64', 65') essentiellement symétriques.

17. Véhicule cabriolet selon l'une quelconque des revendications 13 à 16,
**caractérisé en ce que**
la pièce de profilé creux (63) présente à proximité de ses deux chambres de réception (64, 65), une troisième chambre de réception (66) qui reçoit un bourrelet de pincement (78) relié au bord de la nappe de rembourrage (75').

18. Véhicule cabriolet selon l'une quelconque des revendications 13 à 17,
**caractérisé en ce que**
la pièce de profilé creux (63, 63") comporte sur sa face inférieure dirigée en position de montage vers l'intérieur de l'habitacle (79), un profilé de liaison (80, 80') sur lequel se fixe au moins un élément complémentaire (82, 82') relié au pavillon intérieur (81).

19. Véhicule cabriolet selon l'une quelconque des revendications 13 à 18,
**caractérisé en ce que**
le profilé de liaison (80) est formé de deux pièces en crochet (83, 84) courbées vers le haut, dans lesquelles s'appuie la pièce complémentaire (82) en un seul morceau avec des branches d'accrochage respectives (85, 86).

20. Véhicule cabriolet selon l'une quelconque des revendications 13 à 19,
**caractérisé en ce que**
la pièce de profilé creux (63) comporte dans la zone de liaison avec la pièce complémentaire (82) une forme de rainure (88) qui diminue sa surface d'appui.

21. Véhicule cabriolet selon l'une quelconque des revendications 13 à 20,
**caractérisé en ce que**
le profilé de liaison (80, 80') est relié à la zone de paroi inférieure des chambres de réception (64, 65, 64', 65') par deux branches de liaison (90, 91) essentiellement parallèles.

22. Véhicule cabriolet selon l'une quelconque des revendications 13 à 21,
**caractérisé en ce que**
le bourrelet de pincement (77) appuyé dans la chambre de réception (65) médiane de la pièce de profilé creux (63) est relié par son autre extrémité, directement au revêtement de capote (76).

23. Véhicule cabriolet selon l'une quelconque des revendications 13 à 22,
**caractérisé en ce que**
les deux bourrelets de pincement extérieurs (74, 78) sont chaque fois reliés à des zones partielles de la nappe de rembourrage (75, 75').

24. Véhicule cabriolet selon l'une quelconque des revendications 13 à 23,
**caractérisé en ce que**
le pavillon intérieur (81) est relié par une couture (89) à l'élément complémentaire (82).

25. Véhicule cabriolet selon l'une quelconque des revendications 13 à 24,
**caractérisé en ce que**
la pièce de profilé creux (63') au niveau du profilé de liaison (80'), comporte une troisième chambre de réception (66') dans laquelle pénètre un bourrelet de pincement (78') relié au pavillon intérieur (81).

26. Véhicule cabriolet selon l'une quelconque des revendications 13 à 25,
**caractérisé en ce que**
la pièce de profilé creux (63', 63") au niveau de la branche de liaison (90, 91) comporte chaque fois un orifice de passage (93, 94) traversé par une ceinture de tension (92).

27. Véhicule cabriolet selon l'une quelconque des revendications 13 à 26,
**caractérisé en ce que**
les nappes de rembourrage (75, 75') et/ou le pavillon intérieur (81) sont reliés à proximité de la pièce de profilé creux (63', 63", 63''') par une pièce de liaison par accrochage (95, 96) avec le bourrelet de pincement respectif (74', 77').

28. Véhicule cabriolet selon l'une quelconque des revendications 13 à 27,
**caractérisé en ce que**
la pièce de liaison par accrochage (95, 96) est tenue au revêtement (76) de la capote ou au pavillon intérieur (81) par une couture de liaison (97, 98).
